# EUROPÄISCHE PATENTSCHRIFT

(11) **EP 1 160 609 B1**
(45) Veröffentlichungstag und Bekanntmachung des Hinweises auf die Patenterteilung: **08.06.2005**
(21) Anmeldenummer: 01109997.5
(22) Anmeldetag: 25.04.2001
(51) Int. Cl.: G02B 7/02, G02B 7/18, G02B 7/182, G03F 7/20

(54) **Vorrichtung zur präzisen Positionierung eines Bauteiles, insbesondere eines optischen Bauteiles**
Device for precise alignment of an optical component
Appareil pour le positionnement précis d'un composant optique

(30) Priorität: 27.05.2000 DE 10026541
(43) Veröffentlichungstag der Anmeldung: 05.12.2001
(73) Patentinhaber: Carl Zeiss SMT AG, 73446 Oberkochen (DE)
(72) Erfinder: Bayer, Martin, 96472 Roedental (DE); Melzer, Frank, 73469 Utzmemmingen (DE)
(74) Vertreter: Lorenz, Werner, Dr.-Ing.

(56) Entgegenhaltungen:
- EP-A- 0 597 209
- DE-A- 3 030 549
- DE-A- 4 136 580
- DE-B- 1 675 685
- US-A- 5 537 262

## Beschreibung

Die Erfindung betrifft eine Vorrichtung zur präzisen Positionierung eines Bauteiles, insbesondere eines optischen Bauteiles, wie Linsengruppe oder Spiegel nach der im Oberbegriff von Anspruch 1 näher definierten Art.

Bauteile, insbesondere optische Bauteile, sind häufig sehr genau zu positionieren bzw. auszurichten, weil sie in Wechselwirkung mit anderen Bauteilen stehen oder weil durch sie sehr genaue Messungen vorgenommen werden müssen. Dies gilt z.B. in der Optik für Linsengruppen oder Spiegel. So ist z.B. eine sehr exakte Axial- bzw. Höhenverstellung bei Spiegeln, insbesondere auch Ellipsoidspiegeln, für Beleuchtungssysteme, insbesondere im tiefen ultraviolett Bereich (DUV-Bereich) erforderlich. Normale Gewinde zur Lagerung und Führung sind hierfür ungeeignet, da wegen des zwangsweise vorhandenen Gewindeflankenspieles Kippungen und Verschiebungen einer Mutter Taumelerscheinungen in der zur Schraubrichtung senkrechten Ebene, nämlich der Mutteranlagefläche, erzeugen.

Die Firma Spieth, 73730 Esslingen, bietet unter der Bezeichnung "Spieth-Stellmuttern" für den allgemeinen Maschinenbau Sicherungsmuttern an, die in der Druckschrift DE 1 675 685 A offenbart wurden. Die Sicherungsmuttern bestehen aus einem Führungsring und einem Klemmring, wobei die beiden Ringe elastisch miteinander verbunden sind. Durch zwei knapp nebeneinander sitzende Einstiche von der Innenseite und der Außenseite der Sicherungsmutter aus entsteht eine in axialer Richtung elastische Lamelle bzw. eine Aufteilung in den Führungsring und den Klemmring. Durch eine über Schrauben aufgebrachte Verspannung zwischen dem Führungsring und dem Klemmring wird das Gewindeflankenspiel beseitigt, d.h. es wird eine Spielfreiheit erzeugt.

Nachteilig bei den "Spieth-Stellmuttern" ist jedoch, daß diese beim Verstellen im vorgespannten Zustand zu Freßerscheinungen neigen, da die Klemmung in axialer Richtung über den gesamten Umfang erfolgt. Eine Verstellung der vorgespannten Sicherungsmutter ist damit nicht möglich. Löst man für eine Verstellung die Vorspannung wieder, so treten die vorstehend beschriebenen Taumelerscheinungen auf. Dies bedeutet eine exakte Justage und Halterung von Bauteilen, insbesondere von hochpräzisen optischen Bauteilen, wird dadurch sehr schwierig.

Für eine exakte Winkeleinstellung bzw. für eine exakte Kippein- und -verstellung eines Bauteiles sind diverse Kippvorrichtungen bekannt. So ist z.B. eine Kippvorrichtung für einen Ellipsoidspiegel bekannt, wobei dieser mit drei Schrauben justiert und fixiert wird. Nachteilig dabei ist jedoch, daß die Verstellung einer Schraube immer zu einer Drehung des Brennpunktes um die Achse durch die Auflagepunkte der beiden anderen Schrauben führt. Dies bedeutet, daß dadurch der Brennpunkt des Spiegels aus der optischen Achse der nachfolgenden optischen Elemente herauswandert, wodurch eine exakte Justage des Ellipsoidspiegels mit einem hohen Aufwand verbunden ist.

Der vorliegenden Erfindung liegt daher die Aufgabe zugrunde eine Vorrichtung der eingangs erwähnten Art zu schaffen, durch die die vorstehend genannten Nachteile des Standes der Technik beseitigt werden, insbesondere durch die eine exakte Justierung ohne Freßgefahr bei einer Verstellung in axialer Richtung möglich ist und/oder durch die ein Auswandern des Brennpunktes bzw. der Achse eines zu kippenden Bauteiles vermieden wird.

Erfindungsgemäß wird diese Aufgabe durch die in Anspruch 1 genannten Merkmale gelöst.

Mit der erfindungsgemäßen Vorrichtung läßt sich eine präzise Positionierung eines Bauteiles, insbesondere eines optischen Bauteiles, wie z.B. einer Linsengruppe oder einem Spiegel, sowohl in axialer als auch in radialer Richtung erreichen.

In einer sehr vorteilhaften Ausgestaltung der Erfindung kann vorgesehen sein, daß die Axialverstelleinrichtung eine Spindel aufweist, auf die eine Verstellmutter aufschraubbar ist, wobei die Verstellmutter aus einem Führungsring und einem Klemmring zusammengesetzt ist und beide Ringe elastisch miteinander verbunden sind, wobei über Spannglieder zur Beseitigung des Flankenspieles der Verstellmutter der Klemmring gegen den Führungsring verspannbar ist, und wobei durch Einschnitte in dem Klemmring einzelne Klemmbacken gebildet sind, die jeweils über die Spannglieder mit dem Führungsring verspannbar sind.

Durch die Einschnitte in dem Klemmring, die in vorteilhafter Weise in axialer Richtung oder wenigstens annähernd in axialer Richtung verlaufen, werden diskrete bzw. einzelne Klemmbacken gebildet. Eine Verstellung im vorgespannten Zustand ist damit ohne Freßerscheinungen möglich, da durch die im Gewinde unterschiedlich eingreifenden Klemmbacken, die z.B. als kurze Ringsegmente ausgebildet sind, ein Reinigungseffekt ähnlich wie bei einem Gewindebohrer auftritt.

Wenn in einer Ausgestaltung der Erfindung vorgesehen ist, daß über den Umfang verteilt drei Klemmbacken bzw. Ringsegmente vorgesehen sind, wird eine statisch bestimmte Dreipunktlagerung geschaffen. Das Festsetzen der Verstell- bzw. Einstellmutter ist damit aufgrund der Dreipunktlagerung ohne nennenswerte Dejustage möglich.

Die erfindungsgemäße Vorrichtung läßt sich insbesondere für eine Lagerung sowie Verstellung von optischen Bauteilen, wie z.B. einem Ellipsoidspiegel, auf großen Gewindedurchmessern mit kurzer Baulänge realisieren.

Eine sehr vorteilhafte Ausgestaltung einer Kippeinrichtung kann darin bestehen, daß die Kippeinrichtung ein inneres und ein äußeres Kippteil aufweist, wobei das innere Kippteil direkt oder indirekt mit dem zu kippenden Bauteil verbunden ist und außenseitig über Torsionsgelenke mit dem äußeren Kippteil verbunden ist, welches wiederum über Torsionsgelenke mit einem Lagerteil verbunden ist.

Mit der erfindungsgemäßen Kippeinrichtung wird eine kardanische Aufhängung erreicht. Die Torsionsgelenke können dabei als "normale" Gelenke ausgebildet sein oder sie sind in vorteilhafter Weise als sogenannte Festkörpergelenke ausgebildet, wobei z.B. eine Scheibe mit feinen Schnitten derart unterteilt wird, daß sich zwei Ringe ergeben, nämlich ein Innenring und ein Außenring, die jeweils durch dünne Stege miteinander verbunden sind und die z.B. durch jeweils sich gegenüberliegende Stege und rechtwinklig dazu angeordnete Stege eine kardanische Scheibe bilden.

In einer sehr vorteilhaften und nicht naheliegenden Weiterbildung der Erfindung kann vorgesehen sein, daß die Torsionsgelenke so angeordnet sind, daß bei einem Einsatz für einen Ellipsoidspiegel die neutralen Fasern der Torsionsgelenke durch den Brennpunkt des Ellipsoides zeigen. Auf diese Weise wird eine einfache und achsenunabhängige Justage erreicht.

Der Reflektor des Ellipsoides befindet sich in diesem Falle im Inneren des Innenringes. Mit der erfindungsgemäßen Kippeinrichtung wird eine Kippmöglichkeit durch den Brennpunkt eines Ellipsoidspiegels um zwei Achsen geschaffen.

Ein weiterer Vorteil der erfindungsgemäßen Kippeinrichtung besteht darin, daß nur grobe Fertigungs- und Montagetoleranzen erforderlich sind. Darüber hinaus wird nur ein geringer Bauraum benötigt. Außerdem ist nur ein niedriger Montageaufwand erforderlich.

Nachfolgend ist anhand der Zeichnung ein Ausführungsbeispiel, aus dem weitere erfindungsgemäße Merkmale hervorgehen, prinzipmäßig beschrieben.

Es zeigt:
- Figur 1: die Gesamtansicht eines Ellipsoidspiegels als Beleuchtungsmodul mit einer Lampe,
- Figur 2: eine perspektivische Draufsicht auf den oberen Teil des Ellipsoidspiegels nach der Fig. 1,
- Figur 3: eine perspektivische Ansicht einer Höhenverstelleinrichtung für den Ellipsoidspiegel nach den Figuren 1 und 2, wobei nur die Spannmutter dargestellt ist,
- Figur 4: eine Ansicht der Spannmutter nach der Fig. 3 von unten,
- Figur 5: einen Schnitt nach der Linie V-V der Fig. 4,
- Figur 6: eine Ausschnittsvergrößerung der Einzelheit X der Fig. 5,
- Figur 7: eine perspektivische Darstellung der Kippeinrichtung für den Ellipsoidspiegel nach den Figuren 1 und 2, und
- Figur 8: eine Draufsicht auf die Kippeinrichtung nach der Fig. 7.

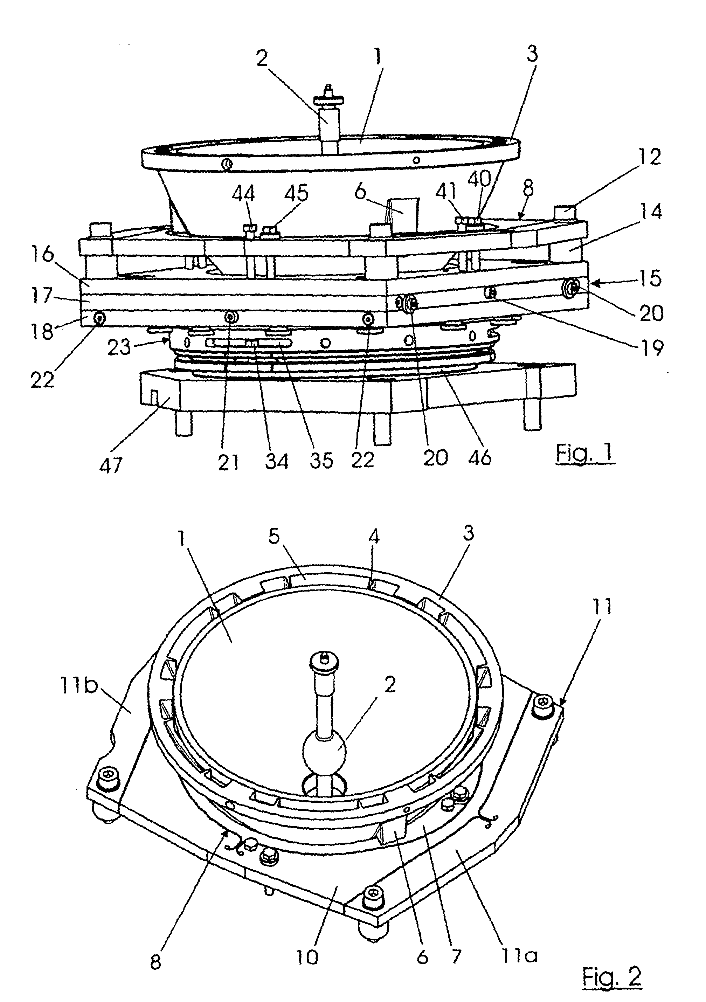

Der in den Figuren 1 und 2 dargestellte Ellipsoidspiegel als Beleuchtungsmodul ist grundsätzlich von bekannter Bauart, weshalb nachfolgend nur die für die Erfindung wesentlichen Teile näher beschrieben werden.

Der Ellipsoidspiegel weist einen Reflektor 1 auf, wobei in seiner Längsachse eine Lampe 2 angeordnet ist. Der Reflektor 1 ist in einer Fassung 3 gelagert, die zu Kühlzwecken mit Kühlrippen 4 und Kühlkanälen 5 versehen sein kann.

Die Fassung 3 ist über drei über den Umfang verteilt angeordnete Gewindefüße 6 mit einem Innenring 7 als inneres Kippteil einer Kippeinrichtung 8 verbunden. Hierzu besitzt der Innenring 7 entsprechend drei Bohrungen 9, in die nicht dargestellte Schrauben durchgesteckt und in Gewindebohrungen der Gewindefüße 6 eingeschraubt werden. Der Innenring 7 ist von einem Außenring 10 als äußeres Kippteil umgeben, welcher wiederum außenseitig mit einem Lagerteil 11 verbunden ist. Das Lagerteil 11 wird durch zwei sich gegenüberliegende Lagerstege 11a und 11b gebildet.

Über vier über den Umfang verteilte Fassungsschrauben 12, die durch Bohrungen 13 in den beiden Lagerstegen 11a und 11b gesteckt sind, ist das Lagerteil 11 über dazwischenliegende Distanzhülsen 14 mit einer darunterliegenden Verstelleinrichtung 15 für die x- und y-Richtung verbunden. Die Verstelleinrichtung kann z.B. drei übereinanderliegende Verstellplatten 16, 17 und 18 aufweisen. Mit der oberen Platte 16 wird die beschriebene Verstelleinrichtung mit den Schrauben 12 fest verbunden. Mit der Verstellschraube 19 und den federnden Druckstücken 20 wird die Platte 16 zur Platte 17 in einer Richtung, z.B. in y-Richtung, verschoben. Die seitliche Führung kann durch ein Überlappen mittels Scheiben erfolgen. Dabei zieht die Schraube 19 die Verstellplatte 16 in eine Richtung, während die Druckstücke 20 die Verstellplatte 16 wieder zurückstellen.

Die Platte 17 wird auf dieselbe Art in eine um 90° zu der vorstehend beschriebenen Verstelleinrichtung zur Platte 18 verschoben (x-Richtung). Die Platte 18 liegt verdrehgesichert auf der Höhenverstelleinrichtung 23 und ist dadurch in vertikaler Richtung (z-Richtung) verschiebbar.

Unterhalb der Verstelleinrichtung 15 befindet sich eine Axialverstelleinrichtung bzw. Höhenverstelleinrichtung 23 für den Ellipsoidspiegel.

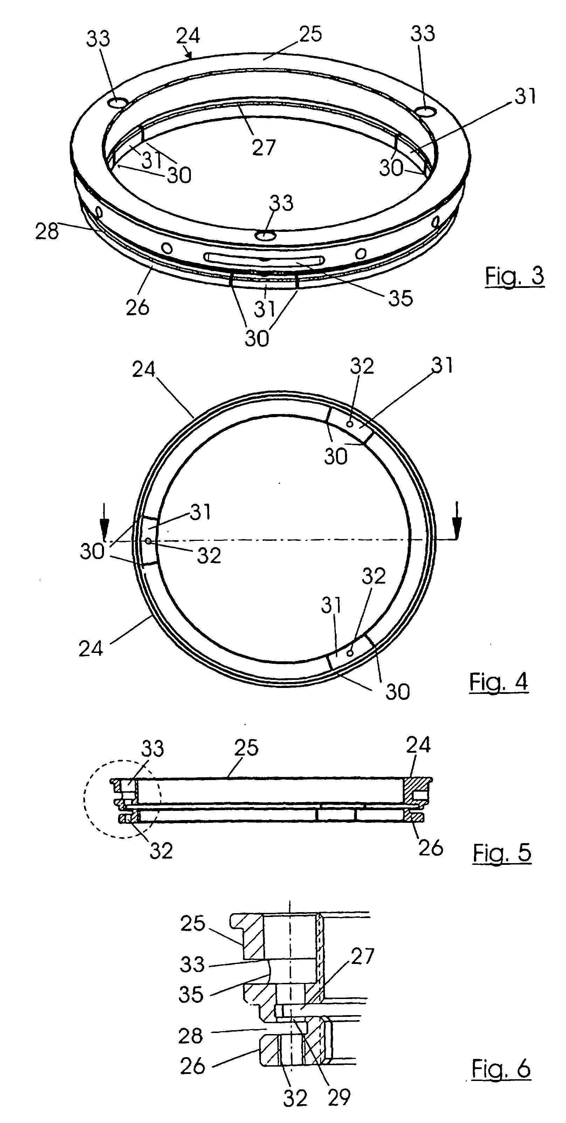

Die Höhenverstelleinrichtung 23 ist aus den Figuren 3 bis 6 näher ersichtlich.

Die Höhenverstelleinrichtung 23 weist eine Verstellmutter 24 auf, die auf eine Spindel 46 aufgeschraubt ist. Die Spindel 46 ist auf einer Grundplatte 47 des Ellipsoidspiegels befestigt. Die Verstellmutter 24 weist einen Führungsring 25 und einen Klemmring 26 auf. In die Verstellmutter 24 sind knapp nebeneinander sitzende Einstiche 27 und 28 von der Innenseite und der Außenseite aus eingebracht. Auf diese Weise entsteht eine elastische Verbindung bzw. Lamelle 29 zwischen dem Führungsring 25 und dem Klemmring 26, womit eine Elastizität in axialer Richtung erreicht wird.

Durch axiale Einschnitte 30 in den Klemmring 26, die jeweils paarweise in geringem Abstand voneinander vorgenommen werden, werden einzelne Klemmbacken in Form von Ringsegmenten 31 gebildet. Aus den Figuren 3 und 4 ist ersichtlich, daß durch sechs Einschnitte 30 drei jeweils um 120° voneinander entfernte Klemmbacken 31 gebildet werden. Jede Klemmbacke ist mit einer Gewindebohrung 32 versehen, die jeweils mit einer in dem Führungsring 25 liegenden Bohrung 33 fluchtet. In die Bohrung 33 wird eine Spannschraube 34 als Spannglied eingesetzt und in die Gewindebohrung 32 des Klemmringes 26 eingeschraubt. Eine der drei Spannschrauben 34 ist in der Fig. 1 dargestellt, wobei auch ersichtlich ist, daß über Längsschlitze 35 in der Umfangswand des Führungsringes 25 eine Zugänglichkeit zur Verstellung der Spannschraube 34 gegeben ist. Die Schraube kann auch von unten in den Führungsring eingeschraubt werden. Dann gibt es in der Konstruktion keine Längsschlitze.

Nach einer Positionierung der Verstellmutter 24 auf der Spindel 46 wird durch ein Verstellen der Spannschrauben 34 eine exakte Justierung bei Spielfreiheit erreicht, wobei der Führungsring 25 mit seiner freien Stirnseite flächig an der unteren Verstellplatte 18, die auch für eine Verdrehsicherung sorgt, anliegt. Dadurch, daß die Spannschrauben 34 jeweils nur diskret an den drei über den Umfang verteilt angeordneten Klemmbacken 31 angreifen, läßt sich die gesamte Verstellmutter 24 zur Justierung noch spielfrei verdrehen und zwar ohne daß es zu Freßerscheinungen kommt, da die Verspannung bzw. die Spielfreiheit nur in den Bereichen der Klemmbacken 31 auftritt. Da Fertigungstoleranzen und sonstige Ungenauigkeiten nie vermeidbar sind, andererseits der Ellipsoidspiegel auf eine bestimmte Position eingestellt werden muß, kann dies durch eine entsprechende spielfreie Verstellung der Verstellmutter 24 erreicht werden. Zur exakten Positionierung wird die Verstellmutter entsprechend verdreht, wodurch aufgrund der Anlage der Verstellmutter an der Verstellplatte 18 der gesamte Ellipsoidspiegel axial bzw. in der Höhe verstellbar ist.

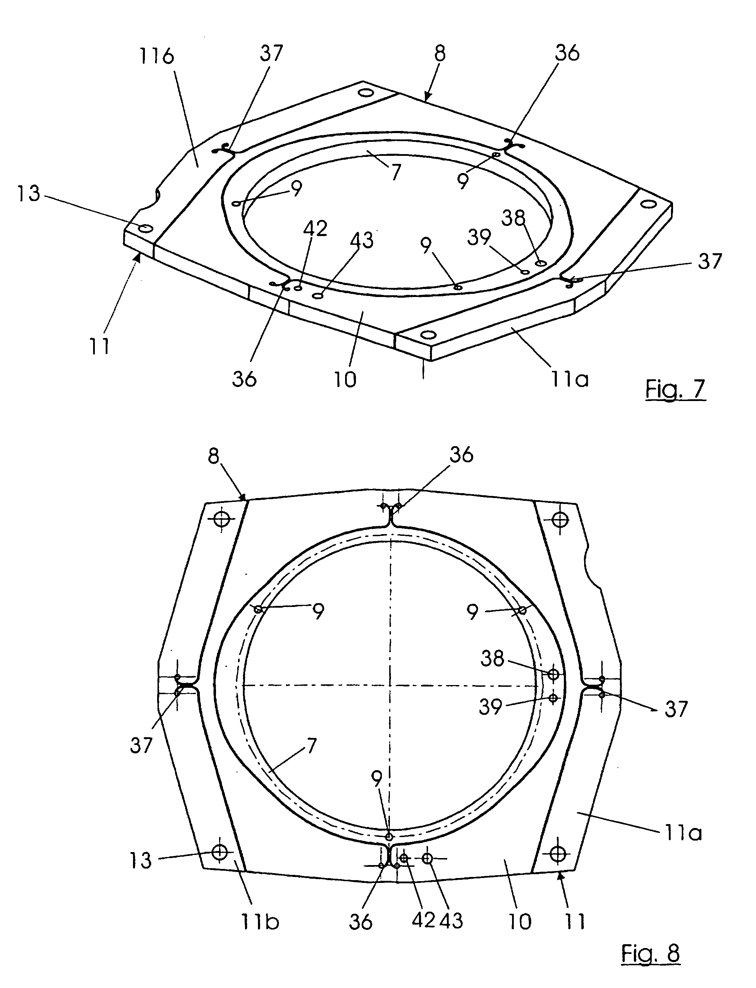

Nachfolgend wird anhand der Figuren 7 und 8 nebst Fig. 2 die Funktionsweise der Kippeinrichtung 8 näher beschrieben.

Wie ersichtlich, besteht die Kippeinrichtung 8 aus einer einstückigen Einheit, wobei die Trennung zwischen dem Innenring 7, dem Außenring 10 und den beiden Lagerstegen 11a und 11b durch dünne Schnitte, z.B. durch einen Laser oder Drahterodieren, geschaffen sind. Die Verbindung zwischen den einzelnen Teilen wird jeweils durch zwei sich gegenüberliegende schmale Stege als Restverbindung zur Bildung von Torsionsgelenken hergestellt. Hierzu befinden sich zwei sich gegenüberliegende Torsionsgelenke 36 als Verbindungsstellen zwischen dem Innenring 7 und dem Außenring 10 und 90° dazu versetzt zwei sich ebenfalls gegenüberliegende Torsionsgelenke 37 als Festkörpergelenke zwischen dem Außenring 10 und den beiden Lagerstegen 11a und 11b.

Zwischen den beiden Torsionsgelenken 36 und um 90° jeweils versetzt dazu sind nebeneinanderliegend zwei Bohrungen 38 und 39 angeordnet, wobei durch die Bohrung 38 eine Zugschraube 40 gesteckt wird, die in eine Gewindebohrung in der Platte 16 geschraubt wird, und eine Druckschraube 41 in die Gewindebohrung 39 eingeschraubt wird, welche sich in der Verstellplatte 16 der Verstelleinrichtung 15 abstützt (siehe Fig. 1).

In gleicher Weise befinden sich zwei Bohrungen 42 und 43 in dem Außenring 10, welche wenigstens annähernd 90° versetzt zu den beiden Torsionsgelenken 37 liegen. In die beiden Bohrungen 42 und 43 sind jeweils wieder eine Druckschraube 44 und eine Zugschraube 45 eingesetzt, die sich in gleicher Weise wie die Schrauben 40 und 41 abstützen (siehe ebenfalls Fig. 1).

Durch Verstellung der Schrauben 40 und 41 bzw. 44 und 45 lassen sich Innenring 7 und Außenring 10 gegeneinander verkippen und zwar aufgrund der gewählten Anordnung auf kardanische Weise. Auf diese Weise läßt sich die Fassung 3 und damit auch der Reflektor exakt justieren.

Die Lage der Torsionsgelenke 36 und 37 ist so gewählt, daß deren neutrale Fasern durch den Brennpunkt des Ellipsoides führen. Die Lampe 2 sitzt im Fokus und damit ebenfalls im Brennpunkt des elliptischen Spiegels. Mit der vorstehend beschriebenen Kippeinrichtung wird eine achsenneutrale Kippung erreicht, d.h. die Kippung um eine Achse führt zu keiner Verstellung in der anderen Achse.

Um die gewünschte Lage der Torsionsgelenke 36 und 37 in der neutralen Faser zu erreichen, ist der Reflektor 1 mit seiner Fassung 3 so in den freien Innenraum des Innenrings 7 einzusetzen, daß der Teil des Ellipsoides vom Scheitel bis zum Brennpunkt in dem freien Innenraum aufgenommen ist.

In gleicher Weise, wie vorstehend für einen Ellipsoidspiegel beschrieben, lassen sich die erfindungsgemäße Axialverstelleinrichtung 23 und die Kippeinrichtung 8 auch für andere Bauteile, bei denen es auf eine hochgenaue Einstellung ankommt, einsetzen. Dies gilt z.B. für Linsengruppen in einem Objektiv, die ebenfalls an definierten Punkten in einer, wie vorne beschriebenen kardanischen Aufhängung, aufgehängt werden, um den gewünschten Justageeffekt zu erzielen. Dabei kann man einzelne Linsen oder auch die ganze Gruppe entsprechend exakt justieren. Grundsätzlich ist die Vorrichtung überall dort einsetzbar, wo man sehr präzise zu einer Mittelachse justieren oder verspannen muß und zwar ohne daß Taumelbewegungen auftreten.

Die Lampe 2 ist in drei Achsen (x, y, z) unabhängig vom Reflektor verstellbar. Die Verstellung ist im Inneren der Vorrichtung eingebaut. Durch Verstellung von Lampe 2 und Reflektor 1 läßt sich der zweite Fokus gezielt auf einen bestimmten Punkt justieren.

## Patentansprüche

1. Vorrichtung zur präzisen Positionierung eines Bauteiles (1), insbesondere eines optischen Bauteiles, wie Linsengruppe oder Spiegel, in axialer Richtung, bestehend aus einer Axialverstelleinrichtung (22), die eine Spindel (46) aufweist, auf die eine Verstellmutter (24) aufschraubbar ist, wobei die Verstellmutter (24) aus einem Führungsring (25) und einem Klemmring (26) zusammengesetzt ist und beide Ringe elastisch miteinander verbunden sind, wobei über Spannglieder (34) zur Beseitigung des Flankenspieles der Verstellmutter (24) der Klemmring (26), gegen den Führungsring (25) verspannbar ist, **dadurch gekennzeichnet, dass** durch Einschnitte (30) in dem Klemmring (26) einzelne Klemmbacken (31) gebildet sind, die jeweils über die Spannglieder (34) mit dem Führungsring (25) verspannbar sind.

2. Vorrichtung nach Anspruch 1, **dadurch gekennzeichnet, dass** zum Kippen des Bauteiles eine Kippeinrichtung (8) vorgesehen ist, die ein inneres (7) und ein äußeres Kippteil (10) aufweist, wobei das innere Kippteil (7) direkt oder indirekt mit dem zu kippenden Bauteil (1) verbunden ist und außenseitig über Torsionsgelenke (36) mit dem äußeren Kippteil (10) verbunden ist, welches wiederum über Torsionsgelenke (37) mit einem Lagerteil (11) verbunden ist.

3. Vorrichtung nach Anspruch 1, **dadurch gekennzeichnet, dass** durch axiale Einschnitte (30) wenigstens drei über den Umfang des Klemmrings (26) verteilt angeordnete Klemmbacken (31) gebildet sind.

4. Vorrichtung nach Anspruch 3, **dadurch gekennzeichnet, dass** die Klemmbacken (31) als Ringsegmente ausgebildet sind.

5. Vorrichtung nach Anspruch 2, **dadurch gekennzeichnet, dass** das innere Kippteil als Innenring (7) ausgebildet ist, das von einem äußeren Ring (10) als äußeres Kippteil umschlossen ist.

6. Vorrichtung nach Anspruch 5, **dadurch gekennzeichnet, dass** bei einem Ellipsoidspiegel als optisches Bauteil der Reflektor (1) des Ellipsoidspiegels im Inneren des Innenringes (7) vom Brennpunkt bis zum Scheitel ragt.

7. Vorrichtung nach Anspruch 6, **dadurch gekennzeichnet, dass** die Torsionsgelenke (36,37) so angeordnet sirid, dass deren neutrale Fasern durch den Brennpunkt des Ellipsoidspiegels zeigen.

8. Vorrichtung nach einem der Ansprüche 5 bis 7, **dadurch gekennzeichnet, dass** jeweils zwei Torsionsgelenke (36 bzw. 37) eines Ringes (7 bzw. 10) sich gegenüberliegend angeordnet sind, und dass die Torsionsgelenke (36 bzw. 37) der beiden Ringe (7 bzw. 10) um 90° versetzt zueinander liegen.

9. Vorrichtung nach Anspruch 2 und einem der Ansprüche 5 bis 8, **dadurch gekennzeichnet, dass** das innere Kippteil (Innenring 7) und das äußere Kippteil (Außenring 10) jeweils durch Schrauben (40,41,44,45) gegeneinander kippbar sind.

10. Vorrichtung nach Anspruch 9, **dadurch gekennzeichnet, dass** jede Schraubverbindung jeweils wenigstens eine Zugschraube (40,44) und eine Druckschraube (41,45) aufweist.

11. Vorrichtung nach Anspruch 2 oder einem der Ansprüche 5 bis 10, **dadurch gekennzeichnet, dass** bei einem Reflektor (1) eines Ellipsoidspiegels als Bauteil dieser direkt oder indirekt mit dem inneren Kippteil (Innenring 7) verbunden ist.

12. Vorrichtung nach Anspruch 2, **dadurch gekennzeichnet, dass** bei einer Linsengruppe als Bauteil das innere Kippteil (7) die Fassung einer Linse darstellt.

13. Vorrichtung nach Anspruch 2 oder einem der Ansprüche 5 bis 12, **dadurch gekennzeichnet, dass** das äußere Kippteil (Aussenring 10) mit zwei sich gegenüberliegenden Lagerstegen (11a,11b) als Lagerteil (11) über Torsionsgelenke (37) verbunden ist.

## Claims

1. Device for the precise positioning of a component (1), in particular of an optical component such as a lens system or a mirror, in the axial direction, consisting of an axial adjusting device (23) comprising a spindle (46) onto which an adjusting nut (24) can be screwed, wherein the adjusting nut (24) is composed of a guide ring (25) and a gripping ring (26), and the two rings are resiliently connected together, wherein the gripping ring (26) can be clamped against the guide ring (25) via clamping members (34) for eliminating the flank clearance of the adjusting nut (24), **characterised in that** individual gripping jaws (31) are formed by notches (30) in the gripping ring (26), which jaws can in each case be clamped to the guide ring (25) via the clamping members (34).

2. Device according to Claim 1, **characterised in that** a tilting device (8) is provided to tilt the component, which device comprises an inner tilting part (7) and an outer tilting part (10), wherein the inner tilting part (7) is connected directly or indirectly to the component (1) which is to be tilted and on the outside via torsion joints (36) to the outer tilting part (10), which in turn is connected via torsion joints (37) to a bearing part (11).

3. Device according to Claim 1, **characterised in that** at least three gripping jaws (31), which are distributed over the circumference of the gripping ring (26), are formed by axial notches (30).

4. Device according to Claim 3, **characterised in that** the gripping jaws (31) are formed as ring segments.

5. Device according to Claim 2, **characterised in that** the inner tilting part is formed as an inner ring (7) which is surrounded by an outer ring (10) as outer tilting part.

6. Device according to Claim 5, **characterised in that**, given an ellipsoidal mirror as optical component, the reflector (1) of the ellipsoidal mirror projects from the focal point to the vertex in the interior of the inner ring (7).

7. Device according to Claim 6, **characterised in that** the torsion joints (36, 37) are disposed such that their neutral axes point through the focal point of the ellipsoidal mirror.

8. Device according to any one of Claims 5 to 7, **characterised in that** two torsion joints (36 and 37, respectively,) of a ring (7 and 10, respectively,) are in each case disposed opposite one another, and that the torsion joints (36 and 37, respectively,) of the two rings (7 and 10, respectively,) are staggered by 90°.

9. Device according to Claim 2 and any one of Claims 5 to 8, **characterised in that** the inner tilting part (inner ring 7) and the outer tilting part (outer ring 10) can in each case be tilted relative to one another by screws (40, 41, 44, 45).

10. Device according to Claim 9, **characterised in that** each screwed connection comprises at least one draw-in screw (40, 44) and one pressure screw (41, 45).

11. Device according to Claim 2 or any one of Claims 5 to 10, **characterised in that**, given a reflector (1) of an ellipsoidal mirror as component, this is connected directly or indirectly to the inner tilting part (inner ring 7).

12. Device according to Claim 2, **characterised in that**, given a lens system as component, the inner tilting part (7) represents the mount of a lens.

13. Device according to Claim 2 or any one of Claims 5 to 12, **characterised in that** the outer tilting part (outer ring 10) is connected to two mutually opposite bearing webs (11a, 11b) as bearing part (11) via torsion joints (37).

## Revendications

1. Dispositif de positionnement précis d'un composant (1), notamment d'un composant optique comme un groupe de lentilles ou un miroir, dans la direction axiale, constitué d'un dispositif de déplacement axial (23) qui comprend un axe (46) sur lequel un écrou de déplacement (24) peut être vissé, cet écrou de déplacement (24) étant constitué d'une bague de guidage (25) et d'une bague de blocage (26) et les deux bagues étant reliées entre elles de manière élastique, la bague de blocage (26) pouvant être serrée contre la bague de guidage (25) par l'intermédiaire d'éléments de serrage (34) pour supprimer le jeu au niveau du flanc de l'écrou de déplacement (24), **caractérisé en ce que**, à l'aide d'encoches (30) dans la bague de blocage (26), différentes mâchoires de serrage (31) sont formées, qui peuvent être serrées avec la bague de guidage (25) par l'intermédiaire des éléments de serrage (34).

2. Dispositif selon la revendication 1, **caractérisé en ce que**, pour basculer le composant, un dispositif de basculement (8) est prévu, qui comprend un élément de basculement interne (7) et un élément de basculement externe (10), l'élément de basculement interne (7) étant relié directement ou indirectement avec le composant à basculer (1) et relié à l'extérieur par l'intermédiaire d'articulations de torsion (36) avec l'élément de basculement externe (10), lui-même relié par l'intermédiaire d'articulations de torsion (37) avec un élément de palier (11).

3. Dispositif selon la revendication 1, **caractérisé en ce que**, grâce aux encoches axiales (30), au moins trois mâchoires de serrage (31) réparties sur la circonférence de la bague de serrage (26) sont formées.

4. Dispositif selon la revendication 3, **caractérisé en ce que** les mâchoires de serrage (31) sont conçues comme des éléments annulaires.

5. Dispositif selon la revendication 2, **caractérisé en ce que** l'élément de basculement interne est conçu comme une bague interne (7) entourée d'une bague externe (10) servant d'élément de basculement externe.

6. Dispositif selon la revendication 5, **caractérisé en ce que**, lorsque le composant optique est un miroir de forme ellipsoïde, le réflecteur (1) de ce miroir de forme ellipsoïde dépasse à l'intérieur de la bague interne (7) du foyer vers le sommet.

7. Dispositif selon la revendication 6, **caractérisé en ce que** les articulations de torsion (36, 37) sont disposées de telle sorte que leurs fibres neutres passent par le foyer du miroir ellipsoïde.

8. Dispositif selon l'une des revendications 5 à 7, **caractérisé en ce que** deux articulations de torsion (36 ou 37) d'une bague (7 ou 10) sont disposées l'une en face de l'autre, et **en ce que** les articulations de torsion (36 ou 37) des deux bagues (7 ou 10) sont décalées l'une par rapport à l'autre de 90°.

9. Dispositif selon la revendication 2 et l'une des revendications 5 à 8, **caractérisé en ce que** l'élément de basculement interne (bague interne 7) et l'élément de basculement externe (bague externe 10) peuvent être basculés l'un par rapport à l'autre grâce à des vis (40, 41, 44, 45).

10. Dispositif selon la revendication 9, **caractérisé en ce que** chaque liaison vissée comprend au moins une vis de traction (40, 44) et une vis de pression (41, 45).

11. Dispositif selon la revendication 2 ou l'une des revendications 5 à 10, **caractérisé en ce que**, lorsque le composant est un réflecteur (1) d'un miroir ellipsoïde, celui-ci est relié directement ou indirectement avec l'élément de basculement interne (bague interne 7).

12. Dispositif selon la revendication 2, **caractérisé en ce que**, lorsque le composant est un groupe de lentilles, l'élément de basculement interne (7) constitue la monture d'une lentille.

13. Dispositif selon la revendication 2 ou l'une des revendications 5 à 12, **caractérisé en ce que** l'élément de basculement externe (bague externe 10) est relié par l'intermédiaire d'articulations de torsion (37) avec deux nervures de logement (11a, 11b) opposées, qui constituent l'élément de logement (11).
